# EUROPÄISCHE PATENTANMELDUNG

(11) **EP 4 197 409 A1**
(43) Veröffentlichungstag der Anmeldung: **21.06.2023**
(21) Anmeldenummer: 22186831.8
(22) Anmeldetag: 26.07.2022
(51) Int. Cl.: A47J 42/38

(54) **MAHLRINGBAUGRUPPE FÜR VERBESSERTE MAHL-REPRODUZIERBARKEIT**

(30) Priorität: 14.12.2021 DE 102021133059
(71) Anmelder: Eugster/Frismag AG, 8580 Amriswil (CH)
(72) Erfinder: Kurath, Christian, 9437 Marbach (CH); Eberle, Rainer, 9000 St. Gallen (CH)
(74) Vertreter: Patent- und Rechtsanwälte Behrmann Wagner PartG mbB

(57) **Zusammenfassung**

Die Erfindung betrifft eine Mahlringbaugruppe (12) für ein Mahlwerk, insbesondere für ein mit einer Mahlgradverstelleinrichtung versehenes Mahlwerk für Kaffeebohnen, umfassend einen Mahlring (1) und eine Mahlringaufnahme (5), wobei die Mahlringaufnahme (5) Verstellmittel (7) aufweist, die im Mahlwerk die Mahlgradverstelleinrichtung mitausbilden, und wobei der Mahlring (1) in einer axialen Richtung (A) und in einer Umfangsrichtung (U) gegenüber der Mahlringaufnahme (5) gesichert und/oder befestigt ist. Erfindungsgemäß ist vorgesehen, dass einen sich über den gesamten Umfang erstreckende Formschlussverbindung (13) zwischen Mahlring (1) und Mahlringaufnahme (5) zur Befestigung von Mahlring (1) und Mahlringaufnahme (5) in axialer Richtung(A) und in Umfangsrichtung (U).

## Beschreibung

Die vorliegende Erfindung betrifft eine Mahlringbaugruppe für ein Mahlwerk, insbesondere für ein mit einer Mahlgradverstelleinrichtung versehenes Mahlwerk für Kaffeebohnen, besonders bevorzugt zur Integration in eine Getränkezubereitungsvorrichtung, nach dem Oberbegriff des Anspruchs 1. Ferner betrifft die vorliegende Erfindung ein Mahlwerk mit einer Mahlgradverstelleinrichtung für Kaffeebohnen, insbesondere für eine Getränkezubereitungsvorrichtung. Weiterhin betrifft die vorliegende Erfindung eine Getränkezubereitungsvorrichtung mit einem entsprechenden Mahlwerk oder einer Mahlringbaugruppe gemäß dem Oberbegriff des Anspruchs 7. Außerdem betrifft die vorliegende Erfindung ein Verfahren zur Herstellung einer Mahlringbaugruppe für ein Mahlwerk, insbesondere für ein mit einer Mahlgradverstelleinrichtung versehenes Mahlwerk für Kaffeebohnen, mit den Merkmalen des Anspruchs 8.

Aus dem Stand der Technik sind Mahlwerke mit Mahlgradverstellung oder Mahlgradverstelleinrichtungen für Kaffeebohnen, insbesondere zum Einsatz als integrierte Mahlwerke für Getränkezubereitungsvorrichtungen, bevorzugt Kaffee- und/oder Espressovollautomaten, bereits bekannt. Dort ist zur Realisierung der Mahlgradverstellung oder zur Ausbildung der Mahlgradverstelleinrichtung oftmals vorgesehen, dass ein erstes Mahlelement, beispielsweise ein Mahlring von einer Mahlringaufnahme aufgenommen und an dieser drehfest und in axialer Richtung einer Längsmittelachse fixiert oder befestigt wird, wobei die Mahlringaufnahme ihrerseits Verstellelemente, beispielsweise radial überstehende Nasen oder Federn aufweist, die in ein Gewinde des Mahlwerks eingreifen, dessen Gewindesteigung ebenfalls in axialer Richtung einer Längsmittelachse des Mahlrings und des Mahlwerks verläuft. Bevorzugt können die Verstellelemente der Mahlringaufnahme in einen Verstellring des Mahlwerks eingreifen, der ein entsprechendes Innengewinde aufweist. Dies führt dazu, dass eine Rotation der Mahlringaufnahme zu einer axialen Verstellung des Mahlrings im Mahlwerk und damit zu einer Bewegung auf das zweite Mahlelement, bevorzugt auf einen Mahlkegel zu oder zu einer axialen Bewegung vom zweiten Mahlelement, bevorzugt Mahlkegel, weg führt. Durch diese axiale Stellbewegung kann der Abstand zwischen den Mahlflächen der Mahlelemente eingestellt und damit der Mahlgrad des zu mahlenden Substrats, insbesondere der Mahlgrad von Kaffeebohnen, eingestellt werden.

Als Beispiel eines solchen Mahlwerks kann auf die EP 3 216 375 A1 der Anmelderin verwiesen werden.

Bei solchen Mahlwerken mit Mahlgradverstelleinrichtung ist es besonders wünschenswert, dass bei der jeweiligen Mahlgradeinstellung ein reproduzierbares Ergebnis beim Mahlvorgang erzeugt wird, was bedeutet, dass nach Möglichkeit eine gleichbleibende Größenverteilung des gemahlenen Substratmehls, insbesondere Kaffeebohnenmehls, bei einer jeweiligen Mahlgradeinstellung erreicht wird. Dies wiederum ist wichtig, um beim Aufbrühen des gemahlenen Substrats, insbesondere des Kaffeebohnenmehls eine gleichbleibende Qualität des aufgebrühten Getränks, insbesondere Kaffees, zu erhalten. Gleichermaßen ist besonders wünschenswert, dass bei den besagten Mahlwerken, welche oftmals als Großserienprodukt in einer großen Stückzahl hergestellt werden, die Mahlergebnisse bei einer vergleichbaren Mahlgradeinstellung über die verschiedenen Mahlwerke hinweg ähnlich oder sogar sehr ähnlich sind.

Bei bisherigen Mahlringbaugruppen, aufweisend den Mahlring und die Mahlringaufnahme existierten aus der Herstellung der Einzelteile sowie aus der Verbindung der Einzelteile zur Mahlringbaugruppe verschiedene Fertigungstoleranzen, die insgesamt dazu führten, dass die Reproduzierbarkeit des Mahlergebnisses oder des Mahlresultats bei mit demselben Verfahren hergestellten Mahlwerken verbesserungsbedürftig war und auch für einzelne Mahlwerke selbst die Konsistenz oder Reproduzierbarkeit des Mahlergebnisses noch nicht zufriedenstellend war.

Beispielsweise wurden in der Vergangenheit Teile mit asymmetrischen Eigenschaften oder Teile mit einer geringen Symmetrie im Bezug auf die Längsmittelachse verwendet, beispielsweise um eine Schlüsselweite eines Kragens für die kraftschlüssige Anordnung des Mahlrings an der Mahlringaufnahme in Umfangsrichtung und ein Befestigen, insbesondere Einschnappen oder Einrasten des besagten Kragens oder Bundes an entsprechenden Einrastmitteln der Mahlringaufnahme zu ermöglichen. Die verminderte Symmetrie führt aber sowohl in der Herstellung und Bearbeitung des Mahlrings als auch in der Herstellung, Bearbeitung und Weiterverarbeitung der Mahlringaufnahme zu Verzug und dadurch zu entsprechenden Toleranzen.

Ein Beispiel für einen solchen Stand der Technik, der auf die Anmelderin zurückgeht, ist aus der DE 20 2012 102 131 U1 bekannt. Hier ist der beispielsweise in der Explosionsdarstellnug der Fig. 4 dargestellt, dass der Mahlring einen asymmetrischen Kragen mit gegenüberligenden Abflachungen aufweist, der in entsprechende Abflachungen der Mahlringaufnahme eingreifen, um abschnittsweise eine Sicherung in Umfangsrichtung zu ermöglichen. Weiter sind Hakenelemente der Mahlringaufnahme dargestellt, die punktuell oder abschnittsweise den Kragen umgreifen und somit eine Sicherung zwischen Mahlringaufnahme und Mahlring in Axialrichtung ermöglichen.

Aus dem Bereich der Gewürzmühlen ist zudem die EP 1 459 665 A1 bekannt, die ebenfalls die vorangehend beschriebenen Nachteile aufweist.

Vor dem Hintergrund des Stands der Technik stellt sich dementsprechend die vorliegende Erfindung die Aufgabe eine Mahlringbaugruppe, ein Mahlwerk, eine Getränkezubereitungsvorrichtung und ein Verfahren zur Herstellung einer Mahlringbaugruppe anzugeben, die die Nachteile im Stand der Technik überwinden und insbesondere eine verbesserte Reproduzierbarkeit des Mahlergebnisses oder des Mahlvorgangs ermöglichen.

Diese Aufgabe wird für die Mahlringbaugruppe mit den Merkmalen des Anspruchs 1 gelöst. Für die Getränkezubereitungsvorrichtung wird diese Aufgabe mit den Merkmalen des Anspruchs 7 gelöst. Für das Verfahren zur Herstellung einer Mahlringbaugruppe wird diese Aufgabe mit den Merkmalen des Anspruchs 8 gelöst.

Vorteilhafte Ausführungsformen der Erfindung sind Gegenstand der nachfolgenden Beschreibung, der Figurenbeschreibung sowie der Unteransprüche. Grundsätzlich sollen zur Vermeidung unnötiger Wiederholungen verfahrensmäßig offenbarte Merkmale auch als entsprechend zur Vorrichtung gehörig offenbart gelten, und umgekehrt.

Die Mahlringbaugruppe für ein Mahlwerk, insbesondere für ein mit einer Mahlgradverstelleinrichtung versehenes Mahlwerk für Kaffeebohnen, besonders bevorzugt als integriertes Mahlwerk eines Kaffee- und/oder Espressovollautomaten, umfasst einen Mahlring und eine Mahlringaufnahme, wobei die Mahlringaufnahme Verstellmittel aufweist, die im Mahlwerk die Mahlgradverstelleinrichtung mit ausbilden. Ferner ist in der Mahlringbaugruppe der Mahlring in einer axialen Richtung, bevorzugt entlang der Längsmittelachse des Mahlrings und in einer Umfangsrichtung, die bevorzugt in jedem Punkt senkrecht auf der axialen Richtung steht, gegenüber der Mahlringaufnahme gesichert und/oder befestigt. Die Sicherung oder Befestigung in axialer Richtung wie auch in Umfangsrichtung ermöglicht, dass die Mahlringaufnahme und der Mahlring zusammen gedreht oder rotiert werden können und dass eine Axialbewegung der Mahlringaufnahme auch auf den Mahlring übertragen wird, und umgekehrt. Diese Befestigung und/oder Sicherung ist vorteilhaft, um eine Mahlgradverstelleinrichtung zu realisieren, bei der eine Rotationsbewegung auf die Mahlringaufnahme in eine Linearbewegung in axialer Richtung überführt oder übertragen wird, beispielsweise durch das eingangs bereits genannte Gewinde mit einer Steigung in axialer Richtung.

Erfindungsgemäß ist für die Mahlringbaugruppe vorgesehen, dass eine sich über den gesamten Umfang erstreckende Formschlussverbindung zwischen dem Mahlring und der Mahlringaufnahme ausgebildet ist, die die Befestigung und/oder Sicherung des Mahlrings an der Mahlringaufnahme, und umgekehrt, in axialer Richtung und in Umfangsrichtung verwirklicht, bereitstellt und/oder ermöglicht.

Die Erfindung beruht damit auf der Grundüberlegung, dass bei einer sich über den gesamten Umfang erstreckenden Formschlussverbindung zwischen Mahlring und Mahlringaufnahme zur Befestigung von Mahlring und Mahlringaufnahme in axialer Richtung und Umfangsrichtung verschiedene Toleranzen vollständig entfallen und damit letztendlich die Präzision des Mahlspalts zwischen Mahlring und Mahlkegel im Mahlwerk deutlich erhöht werden kann.

Ein weiterer Vorteil bei der Ausbildung einer über den gesamten Umfang verlaufenden oder sich über den gesamten Umfang erstreckenden Formschlussverbindung ist auch, dass in diesem Fall stark oder vollständig symmetrische Bauteile, insbesondere Mahlring und Mahlringaufnahme, eingesetzt werden können, was wiederum dazu führt, dass die Bauteile weniger zum Verzug neigen oder Verzug ausbilden und somit abermals die Toleranzen geringer ausfallen und die Präzision gesteigert werden kann.

Gemäß einer ersten vorteilhaften Ausgestaltung der Mahlringbaugruppe kann vorgesehen sein, dass der Mahlring eine in Umfangrichtung verlaufende Außenoberfläche aufweist, die rotationssymmetrisch bezüglich einer Längsmittelachse in axialer Richtung ist. Wie vorangehend bereits angedeutet, kann eine stärker symmetrische Ausbildung des Mahlrings dazu führen, dass dieser bei der Herstellung, nach der Herstellung und bei der Weiterverarbeitung weniger Verzug ausbildet oder weniger zum Verzug neigt. In diesem Sinne kann eine vollständig rotationssymmetrisch verlaufende Außenoberfläche in Umfangsrichtung in Bezug auf eine in Axialrichtung verlaufende Längsmittelachse des Mahlrings in besonders vorteilhafter Weise den Verzug minimieren und gleichzeitig besonders vorteilhaft für die über den gesamten Umfang verlaufende Formschlussverbindung zwischen Mahlring und Mahlringaufnahme eingesetzt werden, wie nachfolgend noch klarer herausgearbeitet oder im Detail erläutert werden wird.

In einer weiteren, besonders wünschenswerten Ausgestaltung der Mahlringbaugruppe kann zudem vorgesehen sein, dass der Mahlring zur Ausbildung der Formschlussverbindung mit der Mahlringaufnahme einen Kragen oder Bund aufweist, der auf einer in Umfangsrichtung verlaufenden Außenoberfläche des Mahlrings in radialer Richtung überstehend ausgebildet und bevorzugt an einem Ende des Mahlrings in axialer Richtung angeordnet ist. Der Kragen oder Bund kann besonders bevorzugt in Umfangsrichtung durchgehend oder durchgängig und weiter bevorzugt in Umfangsrichtung gleichmäßig ausgebildet sein. Dies bedeutet mit anderen Worten ausgedrückt, dass der Bund oder Kragen, wie auch die sonstigen Konturen oder Oberflächen der Außenoberfläche in Umfangsrichtung vollständig rotationssymmetrisch bezüglich einer Längsmittelachse des Mahlrings in axialer Richtung ausgebildet sein können. Der Kragen oder Bund kann besonders vorteilhaft und leicht genutzt werden, um einen Formschluss im Rahmen der Formschlussverbindung sowohl in axialer Richtung als auch in Umfangsrichtung auszubilden. Die vorteilhafte Ausbildung des Bunds oder Kragens an einem axialen Ende des Mahlrings hat den Vorteil, dass der Mahlring dann besonders einfach und insbesondere flächig oder flächenbündig mit dem besagten axialen Ende in die Mahlringaufnahme eingesetzt und daran oder darin fixiert oder befestigt werden kann. Mit anderen Worten ausgedrückt bedeutet dies, dass die endseitige Anordnung des Bunds oder Kragens an einem axialen Ende des Mahlrings eine einfache oder weniger komplexe Geometrie der Mahlringaufnahme und darüber hinaus eine einfache und materialsparende Ausbildung der Formschlussverbindung zwischen Mahlringaufnahme und Mahlring ermöglicht. Die in Umfangsrichtung durchgängige und/oder gleichmäßige Ausbildung des Bunds oder Kragens hat ebenfalls den Vorteil, dass dadurch die Symmetrie sowohl aufseiten des Mahlrings als auch aufseiten der Mahlringaufnahme, verursacht durch die über den gesamten Umfang verlaufende Formschlussverbindung, erhöht und damit Verzugsneigungen reduziert werden können.

In einer weiteren, besonders bevorzugten Variante der Mahlringbaugruppe kann vorgesehen sein, dass die Mahlringaufnahme zur Ausbildung der Formschlussverbindung eine in Umfangsrichtung verlaufende Nut aufweist, die insbesondere zur Aufnahme des Kragens oder Bunds dient. Besonders bevorzugt kann vorgesehen sein, dass auch die Nut in Umfangsrichtung durchgängig und/oder gleichmäßig ausgebildet ist. Die Nut verläuft bevorzugt so, dass zwei, besonders bevorzugt parallele, Nutwandungen oder Nutwände in radialer Richtung verlaufen und sich über den Umfang erstrecken und ein Nutboden in Umfangsrichtung verläuft und sich über den Umfang erstreckt.

Die beiden Nutwände bilden, bevorzugt durch ihren Formschluss mit den anliegenden Seitenflächen des Kragens, die Sicherung oder Befestigung in axialer Richtung aus. Der Nutboden und die daran formschlüssig anliegende radial außenliegende Oberfläche des Kragens oder Bunds bilden bevorzugt die Befestigung oder Sicherung zwischen Mahlring und Mahlringaufnahme in Umfangsrichtung aus.

Über die besagte Nut kann in besonders vorteilhafter Weise, und besonders bevorzugt im Zusammenspiel mit einem entsprechenden Kragen oder Bund aufseiten des Mahlrings die sich über den gesamten Umfang erstreckende Formschlussverbindung zwischen Mahlring und Mahlringaufnahme ausbilden. Dies stellt besondere Anforderungen an die Ausbildung der Formschlussverbindung, wie nachfolgend im Zusammenhang mit dem erfindungsgemäßen Verfahren noch näher beschrieben werden wird. Denn die sich über den gesamten Umfang erstreckende Formschlussverbindung zwischen Mahlring und Mahlringaufnahme, insbesondere in Form eines durchgängigen Kragens in Umfangsrichtung, der in eine ebenfalls durchgängige und beidseitig geschlossene Nut in der Mahlringaufnahme eingesetzt und darin befestigt wird, verhindert ein aus dem Stand der Technik ansonsten bekanntes Einrasten oder Einhaken des Mahlrings an der Mahlringaufnahme, da die Nut, insbesondere die über den gesamten Umfang umlaufende Nut nicht die entsprechende Verformbarkeit oder Beweglichkeit dazu aufweist.

Gemäß einer weiteren, besonders bevorzugten Ausgestaltung der Mahlringbaugruppe kann weiter vorgesehen sein, dass der Kragen oder Bund auf einer in Umfangsrichtung verlaufenden Außenoberfläche, die bevorzugt senkrecht auf der radialen Richtung verläuft, zumindest abschnittsweise eine Strukturierung aufweist, die zur Sicherung und/oder Befestigung des Mahlrings gegenüber der Mahlringaufnahme in Umfangsrichtung dient.

Durch diese Strukturierung wird, insbesondere wenn die Nut der Mahlringaufnahme, insbesondere der angrenzende Nutboden der Mahlringaufnahme, eine entsprechende oder komplementäre Strukturierung aufweist der Formschluss zwischen Mahlring und Mahlringaufnahme in Umfangsrichtung, insbesondere durch die Vergrößerung der Oberfläche und den Anteil an Oberflächen, die nicht tangential zur Umfangsrichtung verlaufen deutlich verbessert.

Die Strukturierung kann beispielsweise als Zahnung ausgebildet sein. Es können aber auch eine Vielzahl von anderen Strukturen vorgesehen sein. Beispielsweise können die Zähne, ähnlich zu einem Zahnrad parallel zur axialen Richtung ausgebildet. Auch eine Schrägverzahnung mit geneigten Zähnen gegenüber der Axialrichtung ist möglich und vorteilhaft. Aber auch ein gekreuztes Linienmuster, das Rauten, Rechtecke oder Quadrate begrenzt, kann vorteilhaft vorgesehen sein.

In einer weiteren, vorteilhaften Ausgestaltung der Mahlringbaugruppe kann vorgesehen sein, dass der Mahlring aus einem metallischen oder keramischen Werkstoff besteht und dass die Mahlringaufnahme aus einem Kunststoff-Werkstoff besteht.

Die oben genannte Aufgabe wird auch durch ein Mahlwerk, insbesondere ein Mahlwerk mit einer Mahlgradverstelleinrichtung für Kaffeebohnen, besonders bevorzugt zur Integration in eine Getränkezubereitungsvorrichtung, insbesondere einen Kaffee- und/oder Espressovollautomaten, gelöst, bei dem eine Mahlringbaugruppe gemäß einer der vorangehend offenbarten Ausführungen zur Einsatz kommt, wobei die Verstellmittel der Mahlringaufnahme mit weiteren Verstellmitteln des Mahlwerks, bevorzugt ein Gewinde in einem Verstellring des Mahlwerks zusammenwirken, um eine bevorzugte Mahlgradverstelleinrichtung auszubilden.

Wie oben im Hinblick auf die Mahlringbaugruppe bereits ausgeführt, ermöglicht der sich über den gesamten Umfang erstreckende Formschluss oder die sich über den gesamten Umfang erstreckende Formschlussverbindung zwischen Mahlring und Mahlringaufnahme eine Befestigung oder Sicherung zwischen Mahlring und Mahlringaufnahme in Umfangsrichtung sowie in axialer Richtung bei gleichzeitig minimierten oder zumindest deutlich verringerten Toleranzen im Hinblick auf die resultierende Mahlringbaugruppe und damit auch im Hinblick auf das gesamte Mahlwerk.

Die oben genannte Aufgabe wird auch durch eine Getränkezubereitungsvorrichtung, insbesondere Kaffee- und/oder Espressovollautomaten, mit einem integrierten Mahlwerk zum Mahlen von in einem Bohnenbehälter bevorrateten Kaffeebohnen zu Kaffeebohnenmehl und einer Brühgruppe oder Brüheinheit zum Aufbrühen von gemahlenem Kaffeebohnenmehl, welche über Leitmittel für das Kaffeebohnenmehl mit dem Mahlwerk verbunden ist, und wobei das Mahlwerk eine Mahlgradverstelleinrichtung aufweist gelöst, indem das Mahlwerk eine Mahlringbaugruppe nach einer der vorangehenden Ausführungsformen oder ein Mahlwerk gemäß der vorangehend beschriebenen Ausführungsformen umfasst.

Die erfindungsgemäße Getränkezubereitungsvorrichtung ermöglicht damit ein besonders hohes Maß an Reproduzierbarkeit im Hinblick auf das hergestellte oder gemahlene Kaffeebohnenmehl sowie im Hinblick auf die daraus hergestellten oder aufgebrühten Getränke, insbesondere Kaffee-Getränke oder Kaffeespezialitäten.

Die eingangs genannte Aufgabe wird auch durch ein Verfahren zur Herstellung einer Mahlringbaugruppe für ein Mahlwerk, insbesondere für ein mit einer Mahlgradverstelleinrichtung versehenes Mahlwerk für Kaffeebohnen, umfassend einen Mahlring und eine Mahlringaufnahme mit den folgenden Verfahrensschritten gelöst:

In einem ersten Verfahrensschritt wird ein Mahlring bereitgestellt. Das Bereitstellen des Mahlrings kann einerseits lediglich das Zuführen des ansonsten fertig hergestellten Mahlrings zu einem Fertigungsplatz oder einer Fertigungseinrichtung, insbesondere einer Fertigungsstraße umfassen. Das Bereitstellen des Mahlrings kann aber auch die gesamte Herstellung des Mahlrings, beispielsweise über einen spanenden Bearbeitungsvorgang aus einem Rohling und/oder im Rahmen eines additiven Fertigungsprozesses, umfassen. Grundsätzlich sind auch alle bekannten umformenden Alternativen zu spanenden Bearbeitung möglich, wie zum Beispiel Rändeln.

In einem anschließenden Verfahrensschritt erfolgt ein automatisches Überführen des Mahlrings in ein Spritzgusswerkzeug. Das Überführen oder Einsetzen des Mahlrings in ein Spritzgusswerkzeug kann bevorzugt von einer Linear-Handling-Einheit ausgeführt werden.

In einem folgenden Verfahrensschritt erfolgt ein Umspritzen eines Teils des Mahlrings in dem Spritzgusswerkzeug zur Ausbildung der Mahlringaufnahme. Das Umspritzen des Mahlrings umfasst bevorzugt sowohl das Schließen und Versiegeln eines, bevorzugt mehrteiligen, Spritzgusswerkzeugs vor dem Umspritzen als auch das Entriegeln und Öffnen des besagten Spritzgusswerkzeugs im Anschluss oder im Nachgang zu dem eigentlichen Umspritzen eines Teils des Mahlrings. Dieser Verfahrensschritt kann also besonders vorteilhaft die Mahlringaufnahme während des Spritzguss entstehen oder ausbilden lassen. Dies erfordert zwar mitunter komplexe Spritzgusswerkzeuge, reduziert aber die Bauteile und Verfahrensschritte. In einer alternativen Ausführungsform, könnte auch vorgesehen sein, dass eine Art Grundkörper oder Rohling der Mahlringaufnahme zusammen mit dem Mahlring in das Spritzgusswerkzeug eingesetzt wird. In diesem Fall würde durch das Umspritzen im Wesentlichen die Verbindung zwischen dem Rohling oder Grundkörper der Mahlringaufnahme hergestellt oder ausgebildet werden. Dabei könnten weniger komplexe Spritzgussformen zum Einsatz kommen. Es werden dann aber wieder mehr Einzelteile benötigt, was die notwendigen Toleranzen wieder etwas erhöhen könnte.

In einem weiteren Verfahrensschritt ist vorgesehen, dass nach dem Umspritzen von einem Teil des Mahlrings in dem Spritzgusswerkzeug die so entstandene Mahlringbaugruppe aus dem Spritzgusswerkzeug entnommen wird.

Beim Umspritzen eines Teils des Mahlrings wird eine sich über den gesamten Umfang des Mahlrings erstreckende Formschlussverbindung zwischen Mahlring und der, bevorzugt gespritzten, Mahlringaufnahme ausgebildet, die zur Befestigung von Mahlring und Mahlringaufnahme in axialer Richtung und in Umfangsrichtung dient. Das erfindungsgemäß Verfahren ist zwar aus technologischer Sicht nicht trivial, insbesondere im Vergleich zu einer beispielsweise händischen oder teilweise händischen Montage oder Vormontage der Mahlringbaugruppe im Fall der Ausbildung einer Rastverbindung oder Schnappverbindung zwischen Mahlring und Mahlringaufnahme, die im Wesentlich durch eine Krafteinwirkung in axialer Richtung hergestellt wird, gleichzeitig bietet das erfindungsgemäße Verfahren jedoch erhebliche Vorteile. Einerseits kann wie vorangehend bereits an unterschiedlichen Stellen ausgeführt, durch die sich in Umfangsrichtung über den gesamten Umfang erstreckende Formschlussverbindung zwischen Mahlring und Mahlringaufnahme eine Verwendung von symmetrischeren Bauteilen oder Bauteilen mit einer höheren Symmetrie bezüglich eine Längsmittelachse verwendet werden, was bereits deutlich die Toleranzen aufgrund eines Verzugs von weniger symmetrischen Bauteilen reduziert. Gleichzeitig kann durch das Umspritzen des Mahlrings oder eines Teil des Mahlrings bei gleichzeitiger Ausbildung der Mahlringaufnahme im Rahmen der Umspritzung eine Fertigungs- oder Montagetoleranz vollständig eliminiert werden, was abermals einen positiven Effekt auf die Präzision des hergestellten Bauteils oder der hergestellten Mahlringbaugruppe ausübt.

Gemäß einer ersten vorteilhaften Ausführungsform des Verfahrens kann vorgesehen sein, dass der Verfahrensschritt des Überführens des Mahlrings in das Spritzgusswerkzeug unabhängig von einer Rotations-Ausrichtung des Mahlrings bezogen auf eine Längsmittelachse erfolgt. Dies kann besonders vorteilhaft erreicht werden, wenn der Mahlring, eine hochgradige oder vollständige Rotationssymmetrie im Bezug auf die Längsmittelachse aufweist. Im Hinblick auf das Verfahren resultiert daraus der Vorteil, dass die automatisierte Überführung und auch die Bereitstellung des Mahlrings leichter und effektiver automatisiert werden können, da sowohl bei der Bereitstellung als auch bei der Überführung keine genaue Ausrichtung oder Vorzugsrichtung des Mahlrings bezüglich der im Verfahrens integrierten oder vom Verfahren umfassten Bearbeitungs- und Verarbeitungseinrichtungen, insbesondere des verwendeten Spritzgusswerkzeugs, eingehalten oder hergestellt werden muss.

Ein weiterer, besonders vorteilhafter Aspekt des Verfahrens kann realisiert werden, wenn der Mahlring in Axialrichtung über ein federvorgespanntes Formelement, insbesondere auf der Düsenseite des Spritzgusswerkzeugs, in dem Spritzgusswerkzeug gelagert und/oder ausgerichtet wird. Dadurch können besonders einfach und effektiv Höhentoleranzen, die bei der Herstellung des Mahlrings nicht vollständig eliminiert werden können, ausgeglichen werden. Das federvorgespannte Formelement des Spritzgusswerkzeugs kann besonders bevorzugt an einem Ende des Mahlrings in axialer Richtung zur Anlage kommen und besonders bevorzugt in das Innere des Mahlrings, insbesondere in den Bereich der Mahlflächen des Mahlrings hineinreichen, wenn der Mahlring in das Spritzgusswerkzeug eingesetzt wird oder eingesetzt ist.

In einer weiteren, ebenfalls besonders vorteilhaften Ausführungsform des Verfahrens kann vorgesehen sein, dass bei einem Öffnen und einem Schließen des Spritzgusswerkzeugs vor und nach dem Umspritzen eines Teils des Mahlrings ein Einfallkern oder Fallkern in einen Teil des Mahlrings, insbesondere in einen inneren Teil des Mahlrings, angrenzend an Mahlflächen des Mahlrings, eingeführt und entfernt wird.

Der Einfallkern oder Fallkern kann besonders vorteilhaft zum Ausfüllen oder Verschließen eines hinterzogenen oder hinterschnittenen Bereichs der Innenoberfläche des Mahlrings, insbesondere im Bereich der Mahlflächen dienen und somit sicherstellen, dass die Spritzgussform ein Einspritzen oder Anformen von Spritzgussmaterial im Innenbereich des hinterzogenen oder hinterschnittenen Innenbereichs des Mahlrings verhindert wird.

In einer weiteren, vorteilhaften Ausführungsform des Verfahrens kann vorgesehen sein, dass der Einfallkern oder Fallkern beim Schließen des Spritzgusswerkzeugs in axialer Richtung auf dem federvorgespannten Formelement anliegt oder an das federvorgespannte Formelement angepresst wird. Dadurch kann in besonders vorteilhafter Weise, gerade bei einem auch in das Innere des Mahlrings hereinragenden Formelement der gesamte Innenraum des Mahlrings so abgeschlossen oder abgedichtet werden, dass kein Spritzgussmaterial eingespritzt oder abgeschieden wird.

Eine weitere, wünschenswerte Verfahrensvariante sieht vor, dass beim Umspritzen eines Teils des Mahlrings ein Kragen oder Bund des Mahlrings, der auf einer in einer Umfangsrichtung verlaufenden Außenoberfläche des Mahlrings radial überstehend, bevorzugt in Umfangsrichtung durchgängig und gleichmäßig ausgebildet ist, von einer Nut umspritzt wird, die in Umfangsrichtung, besonders bevorzugt durchgängig und gleichmäßig, verläuft und damit die Formschlussverbindung zwischen Mahlring und Mahlringaufnahme bewirkt. Besonders bevorzugt kann beim Umspritzen des Kragens oder Bunds und damit beim Ausbilden der Nut ein Nutgrund realisiert werden, der im Wesentlichen den Formschluss zwischen Kragen und Nut in Umfangsrichtung erzeugt, wohingegen zwei am Nutgrund angrenzende, im Wesentlichen parallel verlaufende Nutwände ausgebildet werden, die den Formschluss zwischen Mahlring und Mahlringaufnahme in axialer Richtung bewirken.

In einer weiteren, vorteilhaften Ausgestaltung des Verfahrens kann vorgesehen sein, dass das Bereitstellen des Mahlrings die Ausbildung, insbesondere durch spanende Bearbeitung, einer Strukturierung auf zumindest einem Teil einer in Umfangsrichtung verlaufenden, bevorzugt senkrecht zur Radialrichtung ausgebildeten, Außenoberfläche eines Bunds oder Kragens des Mahlrings und seiner Außenoberfläche umfasst. Durch die Ausbildung der Strukturierung kann die Oberfläche des Kragens in Umfangsrichtung, die nicht tangential zur Umfangsrichtung verläuft vergrößert werden, was den Formschluss oder die Formschlussverbindung verbessert und insbesondere die Übertragung von Kräften und Drehmomenten verbessert. Die Außenoberfläche kann insgesamt geneigt ausgebildet sin, sollte aber bevorzugt einen Anteil senkrecht senkrecht zur Radialrichtung aufweisen, um eine ausreichende Angriffsfläche für die Kräfte und Drehmomente bei der Rotation bereit zu stellen. Durch das Umspritzen des Mahlrings, zumindest ein Teil des Mahlrings, und bevorzugt im Bereich des Kragens kann bei der Ausbildung der Mahlringaufnahme, insbesondere des Nutbodens, Spritzgussmaterial in die Strukturierung eindringen und somit die Befestigung oder Sicherung zwischen Mahlring und Mahlringaufnahme in Umfangsrichtung verbessern, indem eine an die Strukturierung angeformte, komplementäre Strukturierung des Nutbodens ausgebildet wird. Weiter werden durch die Strukturierung Flächen geschaffen, die gerade nicht tangential zur Umfangsrichtung verlaufen und somit die Sicherung und Befestigung zwischen Mahlring und Mahlringaufnahme in Umfangsrichtung verbessern.

In einer weiteren, vorteilhaften Variante des Verfahrens kann vorgesehen sein, dass beim Umspritzen eines Teils des Mahlrings eine Mahlringaufnahme aus Kunststoff um einen keramischen und/oder metallischen Mahlring gespritzt oder spritzgegossen wird. Die Verwendung von Kunststoff als Spritzgussmaterial erlaubt die Kenntnisse und Fähigkeiten der weit verbreiteten Technologie des Spritzgusses von Kunststoff zu nutzen oder auszunutzen.

Nachfolgend werden Beispiele, Ausführungsformen und Ausgestaltungen der Erfindung anhand von lediglich schematischen Zeichnungen dargestellt und erläutert.

Darin zeigen:
- Fig. 1:: eine perspektivische Darstellung eines Mahlrings zum Einsatz in den erfindungsgemäßen Vorrichtungen und dem erfindungsgemäßen Verfahren;
- Fig. 2:: eine Draufsicht auf eine Mahlringaufnahme zur Verwendung in den erfindungsgemäßen Vorrichtungen und dem erfindungsgemäßen Verfahren;
- Fig. 3:: eine Rückansicht einer Mahlringaufnahme zur Verwendung in den erfindungsgemäßen Vorrichtungen und dem erfindungsgemäßen Verfahren;
- Fig. 4:: eine erfindungsgemäße Mahlringbaugruppe in einer perspektivischen, rückwärtigen Ansicht;
- Fig. 5:: eine Schnittdarstellung durch eine erfindungsgemäße Mahlringbaugruppe;
- Fig. 6:: eine perspektivische Darstellung einer erfindungsgemäßen Mahlringbaugruppe in einem Teil eines Spritzgusswerkzeugs;
- Fig. 7:: eine perspektivische Schnittdarstellung einer erfindungsgemäßen Mahlringbaugruppe in einem zweiten Teil eines Spritzgusswerkzeugs;
- Fig. 8:: eine schematisches Ablaufdiagramm des erfindungsgemäßen Verfahrens.

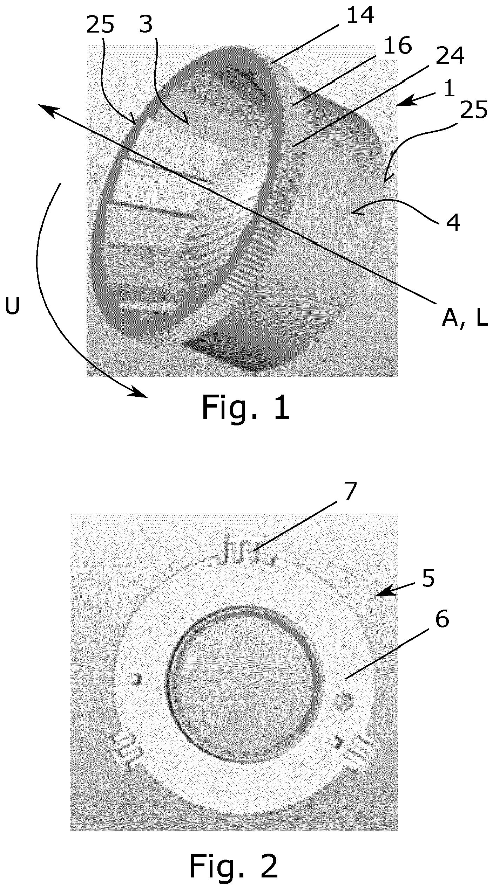

Fig. 1 zeigt einen Mahlring 1 in einer perspektivischen Darstellung. Der Mahlring 1 ist im Wesentlichen rotationssymmetrisch um eine in axialer Richtung A verlaufende Längsmittelachse L aufgebaut und weist abgesehen von den Enden oder Oberflächen an den axialen Stirnseiten 25 oder Stirnseiten 25 in Richtung der Längsmittelachse L im Wesentlichen eine Innenoberfläche 3 und eine Außenoberfläche 4 auf. Die Innenoberfläche 3 ist strukturiert und bildet in axialer Richtung A oder in Richtung der Längsmittelachse L zwei aneinander angrenzende Abschnitte einer Mahloberfläche oder Mahlstruktur aus.

Die Figur 1 zeigt ebenfalls einen in radialer Richtung über die Außenoberfläche 4 überstehenden Bund 14, der auch als Kragen bezeichne werden kann. Der Bund 14 ist rotationssymmetrisch zur Längsmittelachse L ausgebildet und auf einem axialen Ende des Mahlrings 1 oder in Verlängerung einer der Stirnflächen 25 ausgebildet. Der Kragen weist auf einer Außenoberfläche 24 eine Strukturierung 16 auf, die im Beispiel der Figur 1 als Verzahnung ausgebildet ist. Diese Strukturierung ist vorteilhaft gleichmäßig über den gesamten Umfang der Außenoberfläche angeordnet.

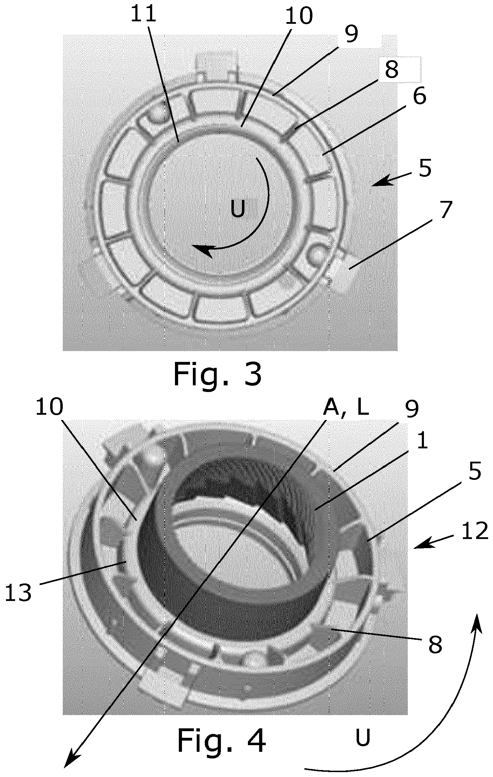

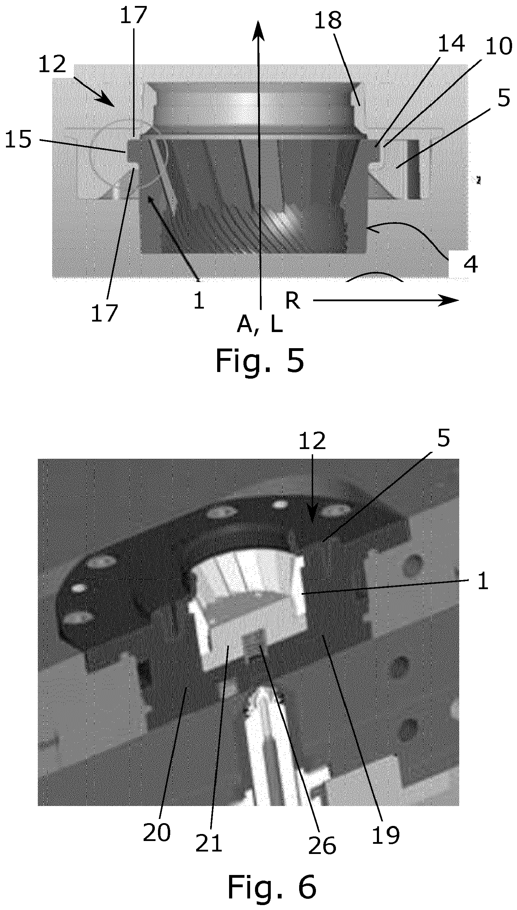

Die Fig. 2 zeigt eine Mahlringaufnahme 5 zum Zusammenwirken mit einem Mahlring 1 gemäß Fig. 1 zur Ausbildung einer erfindungsgemäßen Mahlringbaugruppe (vgl.: Fig. 4 und Fig. 5). Die Mahlringaufnahme 5 umfasst neben einem, weitgehend rotationssymmetrischen, scheibenförmigen Grundkörper 6 in radialer Richtung überstehende Verstellmittel 7, die zum Zusammenwirken mit anderen Verstellmitteln aufseiten des Mahlwerks zur Ausbildung einer Mahlgradverstelleinrichtung vorgesehen sind. Die Verstellmittel 7 sind gleichmäßig über den Umfang verteilt angeordnet.

In der rückwärtigen Ansicht der Mahlringaufnahme 5 gemäß der Fig. 3 ist zu erkennen, dass der Grundkörper 6 über radial verlaufende Verstrebungsstege 8 verfügt, die einen äußeren Ring 9 der Mahlringaufnahme 5 mit einer radial innenliegenden Nut 10 verbinden und insgesamt die Mahlringaufnahme 5 verstärken und/oder versteifen. Von der radial innenliegenden Nut 10 ist in der Draufsicht oder rückseitigen Ansicht der Fig. 3 lediglich eine Nutwand 11 zu erkennen. Es ist jedoch bereits ersichtlich, dass die Nutwand 11 und damit auch die Nut sich über den gesamten Umfang erstreckt. Die Nutwand 11 erstreckt sich im Wesentlichen rechtwinklig zur Längsmittelachse L sowie in radialer Richtung R.

In Fig. 4 ist eine erfindungsgemäße Mahlringbaugruppe 12 dargestellt. In der perspektivischen Ansicht ist erkennbar, dass an einem axialen Ende des Mahlrings 1, und zwar an dem Ende in axialer Richtung A des Mahlrings 1, an dem der Bund 14 angeordnet ist, eine sich über den gesamten Umfang erstreckende Formschlussverbindung 13 ausgebildet wurde, die den Mahlring 1 sowohl in Umfangsrichtung U als auch in axialer Richtung A an der Mahlringaufnahme 5 befestigt und/oder sichert, und umgekeht. Die Formschlussverbindung 13 wurde dadurch ausgebildet oder ist dadurch ausgebildet, dass der Kragen 14 der Außenoberfläche 4 in die Nut 10 der Mahlringaufnahme 5 eingefügt oder eingefasst wurde. Dies bedeutet mit anderen Worten ausgedrückt, dass sowohl in Umfangsrichtung U als auch in axialer Richtung A der Bund 14 von der Nut 10 umschlossen ist. In der Fig. 4 ist erkennbar, dass die entstehende Mahlringbaugruppe 5 insgesamt hochgradig symmetrisch in Bezug auf die Längsmittelachse L ist.

In der Fig. 5, die einen Schnitt durch eine erfindungsgemäße Mahlringbaugruppe 12 darstellt, ist nochmals erkennbar, wie der Mahlring 1 und die Mahlringaufnahme 5 zusammenwirken, um die erfindungsgemäße Mahlringbaugruppe 12 auszubilden. In der Schnittdarstellung ist erkennbar, wie der in radialer Richtung R nach außen über die Außenoberfläche 4 überstehende Bund 14 von der, gleichermaßen wie der Bund 14, in Umfangsrichtung gleichmäßig und vollständig umlaufenden Nut 10 umschlossen ist. An einem Nutgrund 15 liegt die strukturierte Außenoberfläche 24 des Bundes 14 an. Über die außenseitige Strukturierung 16, insbesondere in Form einer Verzahnung, des Bundes 14 wird die Formschlussverbindung 13 oder der Formschluss in Umfangsrichtung U verbessert. Durch die im Wesentlichen parallelen Nutwände 17, die den Bund 14 auf beiden Seiten in axialer Richtung A umgreifen oder umschließen, wird eine Befestigung und/oder Sicherung des Mahlrings 1 gegenüber der Mahlringaufnahme 5, und umgekehrt, in axialer Richtung A gewährleistet.

Ebenfalls erkennbar ist, dass ein in axialer Richtung A oberes Ende der Mahlringaufnahme 5 einen im Wesentlichen zylindrisch ausgebildeten Einführabschnitt 18 für Kaffeebohnen ausbildet.

In der Fig. 6 ist eine erfindungsgemäße Mahlringbaugruppe 12 in einem ersten Teil oder einer ersten Hälfte eines Spritzgusswerkzeugs 19 zur Ausbildung oder zum Spritzgießen der Mahlringaufnahme 5 dargestellt. Bei dem Teil des Spritzgusswerkzeugs 19 handelt es sich um eine Düsenseite 20 des Spritzgusswerkzeugs 19. In dem Spritzgusswerkzeug 19 angeordnet ist ein mit einer Feder 26 vorgespanntes Formelement 21, welches zum Ausgleich einer Höhentoleranz in axialer Richtung A des Mahlrings 1 den Mahlring 1 in dem Spritzgusswerkzeug 19 lagert, insbesondere in axialer Richtung A ausrichtet.

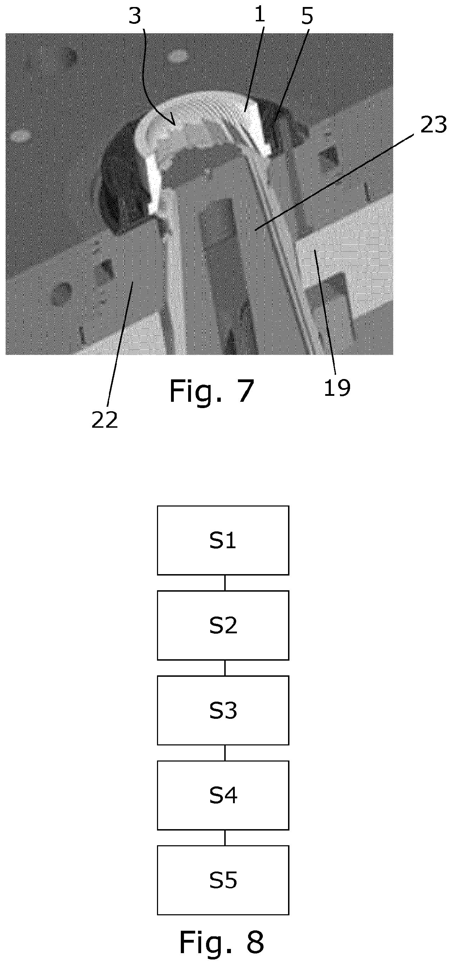

In der Fig. 7 ist eine gegenüberliegende Seite 22 des Spritzgusswerkzeugs 19 dargestellt, mit dem ein Teil des Mahlrings 1, insbesondere der Bund 14 des Mahlrings 1 unter Ausbildung der Mahlringaufnahme 5 umspritzt wird. In der Fig. 7 dargestellt ist ein Fallkern 23 oder Einfallkern, mit dem ein Hinterzug oder Hinterschnitt der Innenoberfläche 3 des Mahlrings 1 ausgeglichen oder ausgefüllt wird, um ein Einfügen oder Befüllen mit Spritzgussmaterial zu verhindern. Der Fallkern 23 kann bevorzugt im geschlossenen Zustand des Spritzgusswerkzeugs 19 auf dem federvorgespannten Element 21 zur Anlage kommen.

Die Fig. 8 zeigt ein schematisches Ablaufdiagramm eines erfindungsgemäßen Verfahrens zur Herstellung einer Mahlringbaugruppe 12 für ein Mahlwerk. In einem ersten Schritt S1 erfolgt die Bereitstellung eines Mahlrings 1. Als Bereitstellung kann die Einbringung in eine Fertigungs- oder Herstellungsvorrichtung verstanden werden. Von der Bereitstellung im Schritt S1 kann aber auch die tatsächliche Herstellung des Mahlrings 1 mitumfasst sein. Dieser kann beispielsweise mittels spanender Bearbeitung aus einem Rohling aus metallischem Werkstoff hergestellt werden.

In einem nachfolgenden und bevorzugten aber optionalen Verfahrensschritt S2 können ein oder mehrere Schritte vorgesehen sein, die den Mahlring 1 in eine Zuführposition zur Überführung des Mahlrings 1 in das Spritzgusswerkzeug 19 überführen. Der Verfahrensschritt S2 kann im Wesentlichen Transportschritte oder Transportmaßnahmen des Mahlrings 1, sowie gegebenenfalls Vereinzelungsmaßnahmen zur Vereinzelung eines Mahlrings 1 aus einer Vielzahl von Mahlringen 1 vorsehen.

In einem daran anschließenden Verfahrensschritt S3 erfolgt die automatische Überführung des Mahlrings 1 in das Spritzgusswerkzeug 19. Bevorzugt erfolgt diese Überführung unabhängig von einer Rotations-Ausrichtung des Mahlrings 1 bezogen auf die Längsmittelachse L, was besonders vorteilhaft dann leicht realisiert werden kann, wenn der Mahlring 1 insgesamt hochgradig symmetrisch oder vollkommen rotationssymmetrisch im Bezug auf die Längsmittelachse L ausgebildet ist, da dann keine bestimmte Ausrichtung oder Vorzugsrichtung gegenüber dem Spritzgusswerkzeug 19 besteht und/oder eingehalten werden muss.

In einem nachfolgenden Verfahrensschritt S4 erfolgt das Umspritzen eines Teils des Mahlrings 1, bevorzugt im Wesentlichen ein Umspritzen des Bundes 14 des Mahlrings 1 zur Ausbildung der Mahlringaufnahme 5, wobei beim Umspritzen eines Teils des Mahlrings 1 eine sich über den gesamten Umfang des Mahlrings 1 erstreckende Formschlussverbindung 13 zwischen dem Mahlring 1 und der beim Umspritzen ausgebildeten Mahlringaufnahme 5 ausgebildet wird, die zur Befestigung des Mahlrings 1 und der Mahlringaufnahme 5 in axialer Richtung A und in Umfangsrichtung U dient. Im Hinblick auf das Vorbereiten und Nachbereiten des Umspritzens im Verfahrensschritt S4 wird auch auf die Fig. 6 und 7 und die dort dargestellten Einzelheiten im Hinblick auf das Spritzgusswerkzeug 19 verwiesen.

In einem weiteren Verfahrensschritt S5 erfolgt das Entnehmen des umspritzten Mahlrings 1 oder der durch das Umspritzen gefertigten Mahlringbaugruppe 12 aus dem Spritzgusswerkzeug 19.

### Bezugszeichen

- 1: Mahlring
- 3: Innenoberfläche
- 4: Außenoberfläche
- 5: Mahlringaufnahme
- 6: Grundkörper
- 7: Verstellmittel
- 8: Verstrebungsstege
- 9: äußerer Ring
- 10: innenliegende Nut
- 11: Nutwand
- 12: Mahlringbaugruppe
- 13: Formschlussverbindung
- 14: Bund
- 15: Nutgrund
- 16: außenseitige Strukturierung
- 17: Nutwände
- 19: Spritzgusswerkzeug
- 20: Düsenseite
- 21: Formelement
- 22: Seite
- 23: Fallkern oder Einfallkern
- 24: Außenoberfläche
- 25: Stirnseite
- 26: Feder

- S1 - S6: Verfahrensschritte

- A: axiale Richtung
- L: Längsmittelachse
- R: radiale Richtung
- U: Umfangsrichtung

## Patentansprüche

1. Mahlringbaugruppe (12) für ein Mahlwerk, insbesondere für ein mit einer Mahlgradverstelleinrichtung versehenes Mahlwerk für Kaffeebohnen, umfassend einen Mahlring (1) und eine Mahlringaufnahme (5), wobei die Mahlringaufnahme (5) Verstellmittel (7) aufweist, die im Mahlwerk die Mahlgradverstelleinrichtung mitausbilden, und wobei der Mahlring (1) in einer axialen Richtung (A) und in einer Umfangsrichtung (U) gegenüber der Mahlringaufnahme (5) gesichert und/oder befestigt ist,
**gekennzeichnet durch**
einen sich über den gesamten Umfang erstreckende Formschlussverbindung (13) zwischen Mahlring (1) und Mahlringaufnahme (5) zur Befestigung von Mahlring (1) und Mahlringaufnahme (5) in axialer Richtung(A) und in Umfangsrichtung (U).

2. Mahlringbaugruppe nach Anspruch 1,
**dadurch gekennzeichnet,**
**dass** der Mahlring (1) eine in Umfangsrichtung (U) verlaufende Außenoberfläche(4) aufweist, die rotationssymmetrisch bezüglich einer Längsmittelachse (L) in axialer Richtung (A) ist.

3. Mahlringbaugruppe nach Anspruch 1 oder 2,
**dadurch gekennzeichnet,**
**dass** der Mahlring (1) zur Ausbildung der Formschlussverbindung (13) einen Kragen oder Bund (14) aufweist, der auf einer in Umfangsrichtung (U) verlaufenden Außenoberfläche (4) radial überstehend ausgebildet und bevorzugt an einem Ende des Mahlrings (1) in axialer Richtung (A) angeordnet ist.

4. Mahlringbaugruppe nach einem der Ansprüche 1 bis 3,
**dadurch gekennzeichnet,**
**dass** die Mahlringaufnahme (5) zur Ausbildung der Formschlussverbindung (13) eine in Umfangsrichtung (U) verlaufende Nut (10) aufweist, die insbesondere zur Aufnahme des Kragens oder Bunds (14) dient.

5. Mahlringbaugruppe nach Anspruch 4,
**dadurch gekennzeichnet,**
**dass** der Kragen oder Bund (14) auf einer in Umfangsrichtung (U) verlaufende Außenoberfläche (24) zumindest abschnittsweise eine Strukturierung (16) aufweist, die zur Sicherung und/oder Befestigung des Mahlrings (1) gegenüber der Mahlringaufnahme (5) in Umfangsrichtung (U) dient.

6. Mahlringbaugruppe nach einem der Ansprüche 1 bis 5,
**dadurch gekennzeichnet,**
**dass** der Mahlring (1) aus einem metallischem oder keramischem Werkstoff besteht und dass die Mahlringaufnahme (5) aus einem Kunstsoff-Werkstoff besteht.

7. Getränkezubereitungsvorrichtung, insbesondere Kaffee- und/oder Espressovollautomaten, mit einem integrierten Mahlwerk zum Mahlen von in einem Bohnenbehälter bevorrateten Kaffeebohnen zu Kaffeebohnenmehl und einer Brühgruppe oder Brüheinheit zum Aufbrühen von gemahlenem Kaffeebohnenmehl welche über Leitmittel für das Kaffeebohnenmehl mit dem Mahlwerk verbunden ist, wobei das Mahlwerk eine Mahlgradverstelleinrichtung aufweist
**dadurch gekennzeichnet,**
**dass** das Mahlwerk einen Mahlringbaugruppe (12) nach einem der Ansprüche 1 bis 6 aufweist.

8. Verfahren zur Herstellung einer Mahlringbaugruppe (12) für ein Mahlwerk, insbesondere für ein mit einer Mahlgradverstelleinrichtung versehenes Mahlwerk für Kaffeebohnen, umfassend einem Mahlring (1) und eine Mahlringaufnahme (5) mit den folgenden Verfahrensschritten:
- Bereitstellen eines Mahlrings (1);
- automatisches Überführen des Mahlrings (1) in ein Spritzgusswerkzeug (19);
- Umspritzen eines Teils des Mahlrings (1) zur Ausbildung der Mahlringaufnahme (5);
- Entnehmen der Mahlringbaugruppe (12) aus dem Spritzgusswerkzeug (19),
wobei,
beim Umspritzen eines Teil des Mahlrings (1) eine sich über den gesamten Umfang des Mahlrings (1) erstreckende Formschlussverbindung (13) zwischen Mahlring (1) und Mahlringaufnahme (5) ausgebildet wird, die zur Befestigung von Mahlring (1) und Mahlringaufnahme (5) in axialer Richtung (A) und in Umfangsrichtung (U) dient.

9. Verfahren nach Anspruch 8,
**dadurch gekennzeichnet,**
**dass** die Überführung des Mahlrings (1) in das Spritzgusswerkzeug (19) unabhängig von einer Rotations-Ausrichtung des Mahlrings (1) bezogen auf eine Längsmittelache (L) erfolgt.

10. Verfahren nach Anspruch 8 oder 9,
**dadurch gekennzeichnet,**
**dass** der Mahlring (1) in axialer Richtung (A) über ein federvorgespanntes Formelement (21), insbesondere auf der Düsenseite (20) des Spritzgusswerkzeugs (19), in dem Spritzgusswerkzeug (19) gelagert und/oder ausgerichtet wird.

11. Verfahren nach einem der Ansprüche 8 bis 10 ,
**dadurch gekennzeichnet,**
**dass** bei einem Öffnen und einem Schließen des Spritzgusswerkzeugs (19) vor und nach dem Umspritzen eines Teil des Mahlrings (1) ein Einfallkern oder Fallkern (23), in einen Teil des Mahlrings (1) eingeführt und entfern wird.

12. Verfahren nach Anspruch 11,
**dadurch gekennzeichnet,**
**dass** der Einfallkern oder Fallkern (23) beim Schließen des Spritzgusswerkzeugs (19) in axialer Richtung (A) auf dem federvorgespanntes Formelement (21) anliegt oder an das federvorgespannte Formelement (21) angepresst wird.

13. Verfahren nach einem der Ansprüche 8 bis 12,
**dadurch gekennzeichnet,**
**dass** beim Umspritzen eines Teils des Mahlrings (1) ein Kragen oder Bund (14) des Mahlrings (1), der auf einer in Umfangsrichtung (U) verlaufenden Außenoberfläche (4) radial überstehend ausgebildet ist von einer Nut (10) umspritzt wird, die in Umfangsrichtung (U) verläuft und damit die Formschlussverbindung (13) zwischen Mahlring (1) und Mahlringaufnahme (5) bewirkt.

14. Verfahren nach einem der Ansprüche 8 bis 13,
**dadurch gekennzeichnet,**
**dass** das Bereitstellen des Mahlrings (1) die Ausbildung, insbesondere durch spanende Bearbeitung, einer Strukturierung (16) auf zumindest einem Teil einer in einer Radialrichtung (R) verlaufende Außenoberfläche (24) eines Bunds (14) oder Kragens umfasst.

15. Verfahren nach einem der Ansprüche 8 bis 14,
**dadurch gekennzeichnet,**
**dass** beim Umspritzen eines Teils des Mahlrings (1) eine Mahlringaufnahme (5) aus Kunststoff um einen keramischen und/oder metallischen Mahlring (1) gespritzt oder spritzgegossen wird.
